# EUROPÄISCHE PATENTSCHRIFT

(11) **EP 3 257 151 B1**
(45) Veröffentlichungstag und Bekanntmachung des Hinweises auf die Patenterteilung: **14.04.2021**
(21) Anmeldenummer: 15705243.2
(22) Anmeldetag: 10.02.2015
(51) Int. Cl.: H02P 6/18, H02P 6/14, H02P 6/16

(54) **ELEKTRISCHES KFZ-NEBENAGGREGAT UND VERFAHREN ZUR KOMMUTIERUNG EINES KFZ-NEBENAGGREGATS**
ELECTRIC DRIVEN AUXILIARY DRIVE FOR MOTORIZED VEHICLE AND METHOD FOR COMMUTATION CONTROL OF SUCH AN AUXILIARY DRIVE
ENTRAINEMENT AUXILIAIRE ÉLECTRIQUE POUR VÉHICULE MOTORISÉ ET PROCEDE DE COMMUTATION D'UN TEL ENTRAINEMENT AUXILIAIRE

(43) Veröffentlichungstag der Anmeldung: 20.12.2017
(73) Patentinhaber: Pierburg Pump Technology GmbH, 41460 Neuss (DE)
(72) Erfinder: HENKE, Toni, 09430 Drebach (DE)
(74) Vertreter: terpatent Patentanwälte ter Smitten Eberlein-Van Hoof Rütten Daubert
(86) Internationale Anmeldenummer: PCT/EP2015/052746
(87) Internationale Veröffentlichungsnummer: WO 2016/128028

(56) Entgegenhaltungen:
- DE-A1-102007 012 669
- US-A- 5 367 234
- US-A1- 2009 261 732
- US-A1- 2010 289 387

## Beschreibung

Die Erfindung bezieht sich auf ein elektrisches Kfz-Nebenaggregat mit einem elektronisch kommutierten Antriebsmotor und auf ein Verfahren zur Kommutierung dieses Antriebsmotors. Die vorliegende Erfindung bezieht sich insbesondere, aber nicht ausschließlich, auf Kfz-Pumpenaggregate, insbesondere Flüssigkeitspumpen, und hierbei insbesondere auf sogenannte Wasserumwälzpumpen.

Für die elektronische Kommutierung eines Antriebsmotors muss die die Kommutierung steuernde Steuereinheit über eine Rotor-Lageinformation verfügen, um die jeweilige Umkehr der Bestromungsrichtung der Statorspulen zum richtigen Zeitpunkt veranlassen zu können. Für das Ermitteln der Rotorlage-Information können eine oder mehrere separate Sensoren vorgesehen werden, beispielsweise auf Magnetfelder reagierende Hallsensoren, die das vorbeilaufende Magnetfeld des permanentmagnetischen Motorrotors oder aber eines separaten Gebermagneten detektieren.

Aus Kostengründen ist man jedoch bestrebt, möglichst keinen separaten Sensor vorzusehen, wie beispielsweise aus US 5,367,234 bekannt. Eine sogenannte sensorlose Rotorlage-Detektion kann dadurch erfolgen, dass in erzwungenen Pausen der Motorbestromung die durch den permanentmagnetischen Rotor in den Statorspulen induzierte Induktionsspannung, sogenannte EMK, ausgewertet wird, und aus dem zeitlichen Verlauf der Induktionsspannung auf die Rotorlage zurückgeschlossen wird. Allerdings erfordert dieses Verfahren eine nicht unerhebliche Rechenleistung der Steuereinheit. Ferner bietet sich dieses Verfahren nur bei kleinen Induktivitäten an, da bei großen Induktivitäten die Bestromungs-Pause sehr lang sein muss, um eine überlagerungsfreie EMK Induktionsspannung beobachten zu können. Insbesondere bei kleinen elektrischen Antriebsmotoren für kleinere Kfz-Nebenaggregate, wie beispielsweise Wasserumwälzpumpen, sind unter anderem aus physikalischen Gründen jedoch hohe Induktivitäten die Regel, so dass dieses Verfahren für kleine Antriebsmotoren nicht geeignet ist.

Aufgabe der Erfindung ist es, ein elektrisches Kfz-Nebenaggregat mit einem elektronisch kommutierten Antriebsmotor sowie ein Verfahren zu seiner Steuerung zu schaffen, der bzw. das einfach aufgebaut ist und geringen Rechenaufwand in der Steuereinheit erfordert.

Diese Aufgabe wird erfindungsgemäß gelöst mit einem elektrischen Kfz-Nebenaggregat mit den Merkmalen des Anspruchs 1 bzw. mit den Verfahrensmerkmalen des Anspruchs 9.

Das erfindungsgemäße Kfz-Nebenaggregat weist im Verlauf des Motorstrompfades einen Motorstromabgriff auf, an dem während der Motorbestromung ein zu dem Motorstrom I_{M} proportionales Spannungssignal abfällt, Der Motorstromabgriff kann in Stromrichtung vor den Leistungshalbleitern angeordnet sein, die durch die Steuereinheit angesteuert werden und die die Versorgungsspannung auf die Motorspulen durchschalten, kann aber alternativ auch dahinter angeordnet sein. An dem Motorstromabgriff wird ein Äquivalent der gesamten elektrischen Leistung erfasst, die über die Leistungshalbleiter zu der bzw. den Motorspule(n) fließt. An dem Motorstromabgriff fällt das Spannungssignal ab, das das Eingangssignal für einen elektrischen Hochpass ist, der elektrisch zwischen dem Motorstromabgriff und der Steuereinheit angeordnet ist, Durch den Hochpass wird das zu dem Motorstrom I_{M} proportionale Spannungssignal U_{M} im mathematischen Sinne differenziert, so dass das Ausgangssignal des Hochpasses im Wesentlichen steile Motorstrom-Hübe in Form von Peaksignalen anzeigt, flache Motorstrom-Hübe und Gleichspannungsanteile jedoch kaum bzw. überhaupt nicht.

Für den zeitlichen Verlauf des Motorstroms während der Rotation des Motorrotors stellt sich bei jedem Polsprung des Motorrotors, also zu dem Zeitpunkt, an dem ein Rotorpol etwa mittig zwischen zwei Statorzähnen steht, eine Besonderheit ein. In diesem Zeitpunkt ist die Induktionsspannung der betreffenden Statorspulen besonders niedrig, so dass der Motorstrom der betreffenden Statorspulen wegen der geringen Gegen-EMK sprungartig ansteigt, Dieser sprungartige Anstieg des Motorstroms wird in dem Hochpass-Ausgangssignal als ein hohes Peaksignal ausgegeben.

Das Ausgangssignal des Hochpasses ist ein Steuersignal für die Steuereinheit, durch die die folgende Umpolung nach einer festen oder einer variablen Verzögerung dt, die auch Null sein kann, ausgelöst wird, nachdem ein Peaksignal eingegangen ist. Das Polsprung- Peaksignal wird von der Steuereinheit also zum Anlass genommen, die folgende Umpolung nach einer festen oder variablen Verzögerung dt auszulösen, die auch Null sein kann. Das Hochpasssignal kann mit Hilfe eines Schwellwert-Eingangs ohne Rechenaufwand in die Steuereinheit eingelesen werden.

Die Steuereinheit muss das von dem Hochpass kommende Signal nicht mehr auswerten und interpretieren, eine Steigung feststellen und bewerten, da die Lastsituation des Antriebsmotors in das Ausgangssignal des Hochpasses überhaupt nicht mehr eingeht. Die Steuereinheit ist also von Auswertungsaufgaben im Bezug auf das Hochpass-Ausgangssignal vollständig entlastet. Für die Steuereinheit kann daher grundsätzlich ein Prozessor mit relativ geringer Rechenleistung bzw. Taktfrequenz gewählt werden. Der Hochpass kann auf sehr einfache und preiswerte Weise in Analogtechnik durch ein sogenanntes RC-Glied realisiert sein.

Als Ergänzung kann eine weitere Rotorlage-Sensorik vorgesehen sein, durch die die Redundanz verbessert und/oder die Drehrichtung erkannt wird.

Vorzugsweise ist der Antriebsmotor einphasig ausgebildet, so dass alle Motorspulen seriell und mit alternierendem Wicklungssinn hintereinander geschaltet sind. Der Antriebsmotor kann aber auch dreiphasig ausgebildet sein.

Gemäß einer bevorzugten Ausführungsform weist der Hochpass eine Grenzfrequenz von mehr als 80 Hz auf, und besonders bevorzugt von mehr als 120 Hz. Eine typische Grenzfrequenz für erfindungsgemäßen Hochpass liegt bei 200 Hz.

Vorzugsweise ist der Hochpass durch einen Tiefpass zu einem Bandpass ergänzt. Durch den zusätzlichen Tiefpass (der beispielsweise eine Grenzfrequenz von 2000 Hz bis 20.000 Hz aufweisen kann) werden insbesondere Störsignale herausgefiltert, die die Steuerung bei der Detektion des Polsprung-Peaksignals stören könnten.

Gemäß einer besonders bevorzugten Ausführungsform weist die Steuereinheit ein Totzeitglied, in der Regel Software oder eine Timereinheit, auf, durch das nach der Detektion eines Polsprung-Signalpeaks das Eingangssignal für eine Totzeit t_{T} ausgetastet wird, die länger als die Verzögerung dt zwischen dem Polsprung-Signalpeak und der folgenden Umpolung ist. Bei einer Umpolung ändert sich sprunghaft die Polarität des Motorstroms, so dass am Ausgang des Hochpasses ein Signalpeak generiert wird, der jedoch nicht durch den Polsprung ausgelöst ist, sondern durch die Umpolung des Motorstroms ausgelöst ist. Da ein Umpolungs-Signalpeak nicht als Polsprung-Signalpeak interpretiert werden darf, wird die Totzeit t_{T} stets so eingestellt, dass der auf einen Polsprung-Signalpeak folgende Umpolungs-Signalpeak nicht fälschlicherweise als Polsprung-Signalpeak bzw. als Kommutator-Triggersignal identifiziert werden kann. Die Einstellung einer Totzeit in der Steuereinheit erfordert nur geringe Rechenleistung, so dass die Steuereinheit hierdurch nicht belastet wird, beziehungsweise eine Steuereinheit mit relativ geringer Rechenleistung eingesetzt werden kann.

Gemäß einer bevorzugten Ausgestaltung der Erfindung ist die Totzeit variabel, und beträgt zwischen 20 % und 60 % eines vorangegangenen Kommutierung-Intervalls, besonders bevorzugt zwischen 30 % und 50 %. Auch für die Einstellung und Errechnung einer relativen Totzeit, die sich proportional aus der Länge des vorangegangenen Kommutierung-Intervalls ergibt, ist nur relativ wenig Rechenleistung in der Steuereinheit erforderlich. Die Totzeit kann abhängig vom Massenträgheitsmoment des Rotors bestimmt werden.

Der Motorstromabgriff kann in Form eines im Motorstrompfad angeordneten niederohmigen Serien-Widerstandes ausgebildet sein, also in Form eines sogenannten Shunts. Vorzugsweise wird der Motorstromabgriff von einem Halbleiter gebildet, besonders bevorzugt von einem Verpolungsschutz-Halbleiter, insbesondere dann, wenn dieser ohnehin vorhanden ist.

Gemäß dem in Anspruch 9 wiedergegebenen Verfahren zur Kommutierung eines Kfz-Nebenaggregats mit den sich auf das Nebenaggregat beziehenden Merkmalen einer der Ansprüche 1-8, sind die folgenden zwei Verfahrensschritte vorgesehen:
Zunächst wird durch die Steuereinheit eine Umpolung ausgelöst, nachdem die Verzögerung dt nach dem Eintreffen des Polsprung-Signalpeaks abgelaufen ist. Zur gleichen Zeit wird das Steuereinheits-Eingangssignal für die Dauer der Totzeit t_{T} ausgetastet, also nicht beachtet.

Besonders bevorzugt werden die Verzögerung dt und die Totzeit t_{T} abhängig von der Länge des vorangegangenen Kommutierungs-Intervalls T_{K} bestimmt, beispielsweise durch eine konstante Proportionierung.

Im Folgenden wird ein Aufführungsbeispiel der Erfindung anhand der Zeichnungen näher erläutert. Es zeigen:
Figur 1 eine schematische Darstellung eines elektrischen Kfz-Nebenaggregats mit einem elektronisch kommutierten Antriebsmotor, und
Figur 2 einen zeitlichen Spannungsverlauf des Hochpass-Ausgangssignals bzw. des Steuereinheit-Eingangssignals der Kommutatoranordnung des Antriebsmotors der Figur 1.

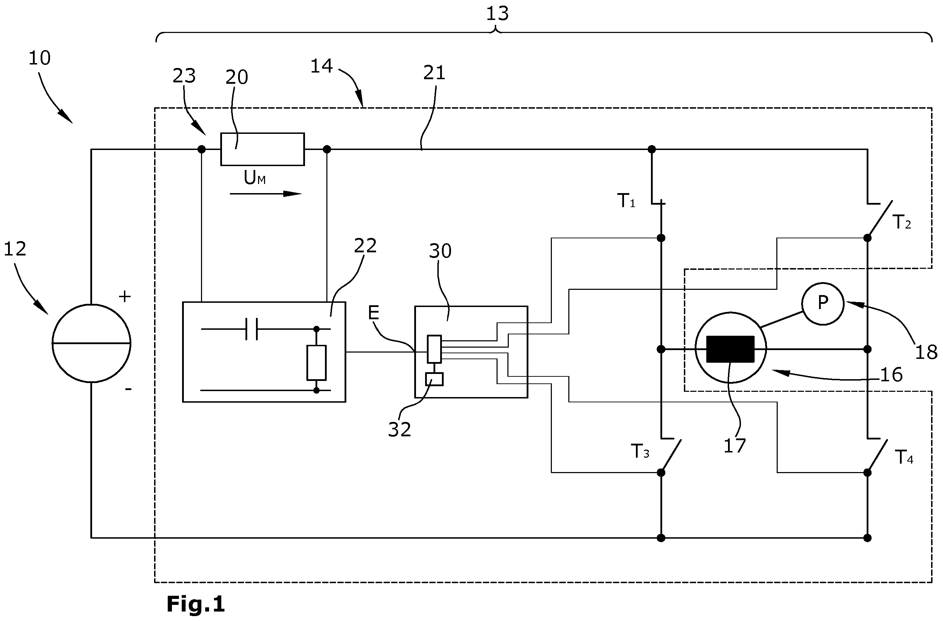

In der Figur 1 ist schematisch eine Anordnung 10 dargestellt, die aus einer Fahrzeugbatterie 12 und einem elektrischen Kraftfahrzeug- (Kfz-) Nebenaggregat 13 mit einem elektronisch kommutierten Antriebsmotor 16 besteht. Der Antriebsmotor 16 wird durch eine elektronische Kommutatoranordnung 14 kommutiert und treibt einen mechanischen Pumpenteil 18 an. Das Kfz-Nebenaggregat 13 kann beispielsweise eine sogenannte Wasserumwälzpumpe mit einer elektrischen Leistung von weniger als 100-200 W sein. Typisch für Niederspannungs-Antriebsmotoren mit relativ geringer elektrischer Leistung ist eine hohe Induktivität der Motorspulen 17 des Antriebsmotors 16. Das Kfz-Nebenaggregat 13 bzw. der Antriebsmotor 16 ist mit der Fahrzeugbatterie 12 elektrisch verbunden, wobei zwischen der Fahrzeugbatterie 12 und dem Nebenaggregat 13 eine Fahrzeugsteuerung eingreifen kann, die das Nebenaggregat 13 bei Bedarf ein- und ausschaltet.

Das Aufschalten einer von der Fahrzeugbatterie 12 zur Verfügung gestellten Bordspannung von beispielsweise 12V auf die Motorspulen 17 erfolgt durch vier in einer sogenannten H-Brücke angeordnete Leistungshalbleiter T₁ bis T₄, über die die Bestromung der Motorspulen 17 umgepolt, also die Bestromungsrichtung der Motorspulen 17 umgeschaltet bzw. gewendet werden kann. Die Motorspulen 17 sind einphasig angeordnet, d.h, in Reihe miteinander verschaltet. Die vier Leistungshalbleiter T₁ bis T₄ werden durch eine Steuereinheit 30 angesteuert, also geöffnet und geschlossen, und zwar derart, dass jeweils zwei diagonal zueinander stehende Leistungshalbleiter T₁,T₄; T₂,T₃ geöffnet und die anderen beiden Leistungshalbleiter T₂,T₃; T₁,T₄ geschlossen sind.

Im Verlauf des Motorstrompfades 21 weist die Kommutatoranordnung 14 einen Motorstromabgriff 23 in Form eines Halbleiters 20 auf, an dem aufgrund seines ohmschen Widerstandes ein zu dem Motorstrom I_{M} proportionales Spannungssignal U_{M} abfällt. Der Motorstromabgriff-Halbleiter 20 kann beispielsweise ein Verpolungsschutz-Halbleiter bzw. - Transistor sein.

Das von dem Motorstromabgriff 23 zur Verfügung gestellte Spannungssignal U_{M} bildet das Eingangssignal für einen Hochpass 22, der in analoger Schaltungstechnik als Hochpassfilter mit einer Grenzfrequenz von ungefähr 200 Hz ausgebildet ist. Das Ausgangssignal des Hochpasses 22 ist ein Eingangssignal E der Steuereinheit 30. Der Hochpass 22 bildet ein Differenzierglied, das den zeitlichen Verlauf des Spannungssignals U_{M} differenziert.

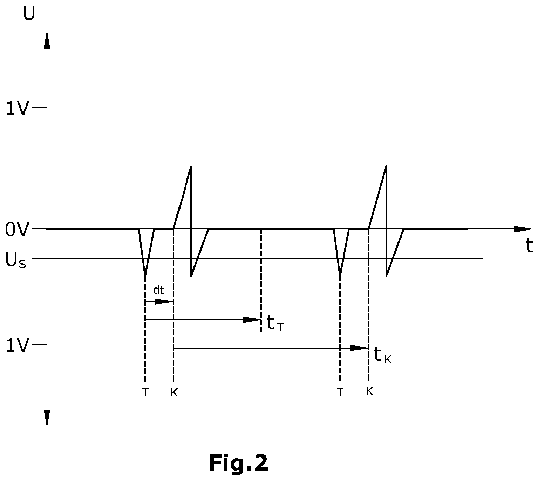

Das Ausgangssignal des Hochpasses 22 bzw. das Eingangssignal E der Steuereinheit 30 ist im zeitlichen Verlauf in der Figur 2 dargestellt. Das erste nach unten gerichtete Peaksignal T kommt dadurch zustande, dass der Motorstrom I_{M} und das hierzu proportionale Spannungssignal U_{M} sprunghaft ansteigt, wenn der ein Rotorpol bzw. alle Rotorpole des Motorrotors ungefähr In der Mitte zwischen zwei Statorpolen des Motorstators stehen. Dieses Peaksignal ist daher eine sehr genaue und sichere Indikation für einen Polsprung, womit vorliegend die Konstellation gemeint ist, bei der der betreffende Rotorpol zwischen zwei Statorpolen steht. Die Steuereinheit 30 blendet alle Eingangssignale zwischen 0 V und einer Schwellenspannung U_{S} aus.

Das Polsprung- Peaksignal T wird von der Steuereinheit 30 als Umpolungs-Triggersignal interpretiert. Sobald das Polsprung-Peaksignal T von der Steuereinheit 30 als zulässiges Triggersignal detektiert wurde, wird durch die Steuereinheit 30 mit einer Verzögerung dt die folgende Umpolung K veranlasst.

Die Steuereinheit 30 weist ein Totzeitglied 33 auf, durch das nach Detektion des Polsprung-Peaksignals das Eingangssignal E für eine Totzeit t_{T} ausgetastet wird. Die Totzeit t_{T} muss länger als die Verzögerung dt sein, und beträgt beispielsweise konstant 40 % des von der Steuereinheit 30 zuletzt errechneten Kommutierungs-Intervalls t_{K}.

Während der Totzeit t_{T} wird das Eingangssignal E ausgetastet, d.h. nicht beachtet. Auf diese Weise werden die durch die Umpolung generierten Umpolungs- Peaksignale, die sich kurz nach der Verzögerung dt ereignen und aufgrund der Umpolung ergeben, ignoriert und können nicht fehlerhaft als einen Polsprung-Peaksignal interpretiert werden.

PPT

## Patentansprüche

1. Elektrisches Kfz-Nebenaggregat (13) mit einem elektronisch kommutierten Antriebsmotor (16) mit Motorspulen (17) und einer elektronischen Kommutatoranordnung (14), die die Motorspulen (17) bestromt, wobei
die Kommutatoranordnung (14) eine Steuereinheit (30), mehrere Leistungshalbleiter (T₁-T₄), die durch die Steuereinheit (30) angesteuert werden, einen Motorstromabgriff (23) und einen Hochpass (22) aufweist, wobei im Verlauf des Motorstrompfades (21) der Motorstromabgriff (23)
angeordnet ist, an dem während der Motorbestromung ein zu dem Motorstrom I_{M} proportionales Spannungssignal U_{M} abfällt, und wobei zwischen dem Motorstromabgriff (23) und der Steuereinheit (30) der Hochpass (22) angeordnet ist, dessen Eingangssignal das Spannungssignal U_{M} ist und dessen Ausgangssignal ein Steuersignal für die Steuereinheit (30) ist, durch das nach Eingang eines Peaksignals (T), das als Umpolungs-Triggersignal interpretiert wird, die folgende Umpolung (K) nach einer Verzögerung (dt) ausgelöst wird.

2. Elektrisches Kfz-Nebenaggregat (13) nach Anspruch 1, wobei der Antriebsmotor (16) einphasig oder dreiphasig ausgebildet ist.

3. Elektrisches Kfz-Nebenaggregat (13) nach einem der vorangegangenen Ansprüche, wobei der Hochpass (22) eine Grenzfrequenz von mehr als 80 Hz, besonders bevorzugt von mehr als 120 Hz aufweist.

4. Elektrisches Kfz-Nebenaggregat (13) nach einem der vorangegangenen Ansprüche, wobei der Hochpass (22) durch einen Tiefpass zu einem Bandpass ergänzt ist.

5. Elektrisches Kfz-Nebenaggregat (13) nach einem der vorangegangenen Ansprüche, wobei die Steuereinheit (30) ein Totzeitglied (33) aufweist, durch das nach Detektion eines Peaksignals (T) das Eingangssignal für eine Totzeit (t_{T}) ausgetastet wird, die länger als die Verzögerung (dt) bis zur eingeleiteten Umpolung ist.

6. Elektrisches Kfz-Nebenaggregat (13) nach Anspruch 4, wobei die Totzeit (t_{T}) zwischen 20% und 90% eines Kommutierungs-Intervalls (t_{K}) beträgt.

7. Elektrisches Kfz-Nebenaggregat (13) nach einem der vorangegangenen Ansprüche, wobei das Nebenaggregat eine Flüssigkeitspumpe ist, insbesondere eine Wasserumwälzpumpe.

8. Elektrisches Kfz-Nebenaggregat (13) nach einem der vorangegangenen Ansprüche, wobei der Motorstromabgriff (23) von einem Halbleiter (20), besonders bevorzugt von einem Verpolungsschutz- Halbleiter gebildet wird.

9. Verfahren zur Kommutierung eines elektrischen Kfz-Nebenaggregats (13) nach einem vorangegangenen Ansprüche, mit folgenden Verfahrensschritten:
Auslösen einer Umpolung (K) durch die Steuereinheit (30), nachdem nach Detektion eines Triggersignals (T) die Verzögerung (dt) verstrichen ist, und
Austasten des Steuereinheit-Eingangssignals (E) für die Dauer einer Totzeit (t_{T}).

10. Verfahren zur Kommutierung eines elektrischen Kfz-Nebenaggregats (13) nach
Anspruch 9, wobei die Verzögerung (dt) und die Totzeit (t_{T}) abhängig von der Länge des vorangegangenen Kommutierungs-Intervalls (t_{K}) bestimmt wird.

## Claims

1. Electric motor vehicle auxiliary unit (13) comprising an electronically commutated drive motor (16) having motor coils (17) and an electronic commutator arrangement (14) energizing the motor coils (17), wherein
the commutator arrangement (14) comprises a control unit (30), multiple power semiconductors (T₁-T₄) which are controlled by the control unit (30), a motor current tap (23) and a high-pass filter (22)
wherein the motor current tap (23) is arranged in the course of the motor current path (21) at which current tap a voltage signal U_{M} proportional to the motor current I_{M} drops during motor energization, and
wherein a high-pass filter (22) is arranged between the motor current tap (23) and the control unit (30), the input signal of which high-pass filter is the voltage signal U_{M} and the output signal of the high-pass filter is a control signal for the control unit (30), by means of which, following the input of a peak signal (T) which is interpreted as a pole reversal trigger signal, the following pole reversal (K) is triggered after a delay (dt).

2. Electric motor vehicle auxiliary unit (13) of claim 1, wherein the drive motor (16) is of a single-phase or a three-phase design.

3. Electric motor vehicle auxiliary unit (13) of one of the preceding claims, wherein the high-pass filter (22) has a cut-off frequency of more than 80 Hz, particularly preferred more than 120 Hz.

4. Electric motor vehicle auxiliary unit (13) of one of the preceding claims, wherein the high-pass filter (22) is supplemented by a low-pass filter to form a band-pass filter.

5. Electric motor vehicle auxiliary unit (13) of one of the preceding claims, wherein the control unit (30) has a dead time element (33) by which, after the detection of a peak signal (T), the input signal is blanked out for the duration of a dead time (t_{T}) that is longer than the delay (dt) until the polarity reversal initiated.

6. Electric motor vehicle auxiliary unit (13) of claim 4, wherein the dead time (t_{T}) is between 20% and 90% of a commutation interval (t_{K}).

7. Electric motor vehicle auxiliary unit (13) of one of the preceding claims, wherein the auxiliary unit is a liquid pump, in particular a water circulating pump.

8. Electric motor vehicle auxiliary unit (13) of one of the preceding claims, wherein the motor current tap (23) is formed by a semiconductor, particularly preferred by a reverse polarity protection semiconductor.

9. Method for commutating an electric motor vehicle auxiliary unit (13) of one of the preceding claims, with the following method steps:
triggering a polarity reversal (K) by the control unit (30) when the delay (dt) has elapsed after the detection of a trigger signal (T), and
blanking out the control unit input signal (E) for the duration of a dead time (t_{T}).

10. Method for commutating an electric motor vehicle auxiliary unit (13) of claim 9, wherein the delay (dt) and the dead time (t_{T}) are determined in dependence on the duration of the previous commutation interval (t_{K}).

## Revendications

1. Unité auxiliaire électrique (13) pour automobile avec un moteur d'entrainement (16) à commutation électronique avec des bobines de moteur (17) et un agencement de commutateur électronique (14) alimentant les bobines de moteur (17),
l'agencement de commutateur (14) comprenant une unité de commande (30) et plusieurs semi-conducteurs de puissance (T₁ - T₄) commandés par l'unité de commande (30), une prise de courant moteur (23) et un filtre passe-haut (22),
ladite prise de courant moteur (23) étant disposée au cours du trajet de courant moteur (21), auquel un signal de tension U_{M} proportionnel au courant moteur I_{M} chute pendant l'alimentation en courant du moteur, et
un filtre passe-haut (22) étant disposé entre la prise de courant de moteur (23) et l'unité de commande (30), le signal d'entrée du filtre passe-haut étant le signal de tension U_{M} et le signal de sortie étant un signal de commande pour l'unité de commande (30), ce signal déclenchant l'inversion de polarité suivante (K) après un délai (dt) après qu'un signal de crête (T), qui est interprété comme signal d'inversion de polarité, a été reçu.

2. Unité auxiliaire électrique (13) pour automobile selon la revendication 1, dans laquelle le moteur d'entrainement (16) est monophasé ou triphasé.

3. Unité auxiliaire électrique (13) pour automobile selon l'une quelconque des revendications précédentes, dans laquelle le filtre passe-haut (22) a une fréquence limite supérieure à 80 Hz, de manière particulièrement préférée supérieure à 120 Hz.

4. Unité auxiliaire électrique (13) pour automobile selon l'une quelconque des revendications précédentes, dans laquelle le passe-haut (22) est complété par un filtre passe-bas afin de former un filtre passe-bande.

5. Unité auxiliaire électrique (13) pour automobile selon l'une quelconque des revendications précédentes, dans laquelle l'unité de commande (30) comporte un élément de temps mort (33) par lequel, après qu'un signal de crête (T) a été détecté, le signal d'entrée est supprimé pour un temps mort (t_{Y}) plus long que le délai (dt) jusqu'à l'inversion de polarité déclenchée.

6. Unité auxiliaire électrique (13) pour automobile selon la revendication 4, dans laquelle le temps mort (t_{Y}) est compris entre 20% et 90% d'un intervalle de commutation (t_{K}).

7. Unité auxiliaire électrique (13) pour automobile selon l'une quelconque des revendications précédentes, dans laquelle l'unité auxiliaire est une pompe à liquide, en particulier une pompe de circulation d'eau.

8. Unité auxiliaire électrique (13) pour automobile selon l'une quelconque des revendications précédentes, dans laquelle la prise de courant du moteur (23) est formée par un semi-conducteur (20), de manière particulièrement préférée par un semi-conducteur de protection contre l'inversion de polarité.

9. Procédé pour la commutation d'une unité auxiliaire électrique (13) pour automobile selon l'une quelconque des revendications précédentes, avec les étapes du procédé suivantes:
déclencher une inversion de polarité (K) par l'unité de commande (30), après, suite à la détection d'un signal de déclenchement (T), le retard (dt) est passé, et
supprimer ledit signal d'entrée (E) de ladite unité de commande pendant la durée d'un temps mort (t_{Y}).

10. Procédé pour la commutation d'une unité auxiliaire électrique (13) pour automobile selon la revendication 9, dans lequel le retard (dt) et le temps mort (t_{Y}) sont déterminés en fonction de la longueur de l'intervalle de commutation précédent (t_{K}).
